# EUROPÄISCHE PATENTANMELDUNG

(11) **EP 1 498 729 A1**
(43) Veröffentlichungstag der Anmeldung: **19.01.2005**
(21) Anmeldenummer: 04011895.2
(22) Anmeldetag: 19.05.2004
(51) Int. Cl.: G01N 27/407, G01N 27/417

(54) **Elektrochemische Pumpzelle für Gassensoren**

(30) Priorität: 17.07.2003 DE 10332519
(71) Anmelder: ROBERT BOSCH GMBH, 70442 Stuttgart (DE)
(72) Erfinder: Scheying, Gerd, 70186 Stuttgart (DE); Eichler, Andreas, 1070 Wien (AT)

(57) **Zusammenfassung**

Es wird eine elektrochemische Pumpzelle eines Gassensors auf Festelektrolytbasis beschrieben, wobei der Gassensor der Messung einer Gaskomponente in einem Gasgemisch dient. Die elektrochemische Pumpzelle weist mindestens zwei Pumpelektroden (20,25) auf, die auf einer Festelektrolytschicht (11a) angeordnet sind, wobei an die Pumpelektroden (20,25) eine elektrische Pumpspannung anlegbar ist und mindestens eine der Pumpelektroden (20) eine verminderte katalytische Aktivität aufweist. Die mindestens eine Pumpelektrode mit verminderter katalytischer Aktivität enthält Cobalt.

## Beschreibung

Die Erfindung betrifft eine elektrochemische Pumpzelle für Gassensoren sowie deren Verwendung und ein Verfahren zu deren Herstellung nach dem Oberbegriff der unabhängigen Ansprüche.

### Stand der Technik

Als Sensoren zur Bestimmung von Schadstoffen in Abgasen von Verbrennungsmotoren werden überwiegend Gassensoren auf Festelektrolytbasis eingesetzt. Die Bestimmung der Schadstoffmenge erfolgt auf elektrochemischem Wege potentiometrisch oder amperometrisch. Da manche der Schadstoffe im Abgas in einem Konzentrationsbereich von nur wenigen ppm vorliegen, wird bei einigen der Gassensoren innerhalb des Sensorelements zunächst eine konstant niedrige Sauerstoffatmosphäre eingestellt und erst dann der entsprechende Schadstoffgehalt detektiert. Die Entfernung des Sauerstoffs wird ebenfalls elektrochemisch vorgenommen. Dabei ist entscheidend, dass mittels der im Sensorelement vorgesehenen Elektroden zwar Sauerstoff reduziert und abgepumpt werden kann, der zu bestimmende Schadstoff jedoch in möglichst unverändertem Umfang im Abgas enthalten bleibt. Dazu bedarf es einer exakten Einstellung der katalytischen Aktivität des Elektrodenmaterials.

Aus der EP 678 740 ist ein Sensor zur Bestimmung des Stickoxidgehaltes in Abgasen bekannt, dessen Elektroden, die der Verringerung des Sauerstoffgehalt des betreffenden Abgases dienen, u. a. aus einer Platin-Gold-Legierung bestehen. Diese Elektroden bedürfen jedoch einer genauen Einstellung der entsprechenden Pumpspannung, da es ansonsten dennoch zu einer Zersetzung der zu bestimmenden Stickoxide kommt.

Weiterhin ist aus der US 4,021,326 ein elektrochemischer Sensor zur Bestimmung des Sauerstoffgehaltes in heißen Verbrennungsabgasen bekannt, bei dem aufpotentiometrischem Wege der Sauerstoffgehalt eines Abgases bestimmt wird. Eine der Spannungsmessung dienende Elektrode ist als elektrisch leitfähige Schicht ausgeführt und kann u. a. aus einer Legierung von Platin, Palladium oder Iridium mit Cobalt bestehen.

Aufgabe der vorliegenden Erfindung ist es, eine elektrochemische Pumpzelle bereitzustellen, die effektiv die Entfernung von Sauerstoff aus einem Gasgemisch ermöglicht.

### Vorteile der Erfindung

Die erfindungsgemäße elektrochemische Pumpzelle bzw. das erfindungsgemäße Verfahren mit den kennzeichnenden Merkmalen der unabhängigen Ansprüche löst in vorteilhafter Weise die der Erfindung zugrundeliegende Aufgabe. Die Pumpzelle ermöglicht die selektive Entfernung von Sauerstoff aus einem Gasgemisch auf elektrochemischem Wege, ohne dass es zu einer Zersetzung von zu bestimmenden Gaskomponenten wie Stickoxiden oder Ammoniak kommt. Dazu wird als Elektrodenmaterial derjenigen Pumpelektrode, die der Entfernung von Sauerstoff aus dem zu bestimmenden Gasgemisch dient, eine Legierung eines Metalls mit Cobalt verwendet. Die Verwendung einer geeigneten Cobaltlegierung ermöglicht eine ausreichend gute Einstellung der katalytischen Aktivität der Elektrode.

Weitere vorteilhafte Weiterbildungen der vorliegenden Erfindung ergeben sich aus den Unteransprüchen. So ist es von Vorteil, wenn als Elektrodenmaterial eine Platin-Cobalt-Legierung vorgesehen wird, wobei diese vorteilhafterweise einen Cobaltgehalt von 30 bis 60 Atom%, insbesondere von 45 bis 55 Atom% aufweist, bezogen auf das Verhältnis von Cobalt zu Platin.

In einer besonders vorteilhaften Ausführungsform weist das Elektrodenmaterial weiterhin eine keramische Komponente auf, die bei der Ausbildung der Pumpzelle innerhalb eines entsprechenden Gassensors eine innige Verbindung der Elektrode mit den Festelektrolytschichten des Gassensors gestattet.

### Zeichnung

Zehn Ausführungsbeispiele der Erfindung sind in der Zeichnung dargestellt und in der nachfolgenden Beschreibung näher erläutert. Es zeigt:
Figur 1 einen Querschnitt durch die Großfläche eines Sensorelements gemäß einem ersten Ausführungsbeispiel,
Figur 2 einen Querschnitt durch die Großfläche eines Sensorelements gemäß einem zweiten Ausführungsbeispiel,
Figur 2a einen Querschnitt durch die Großfläche eines Sensorelements gemäß einer ersten Variante des zweiten Ausführungsbeispiels, bei der die Positionen von erstem und zweitem Mittel bzw. Katalysator vertauscht sind,
Figur 3 einen Querschnitt durch die Großfläche eines Sensorelements gemäß einer zweiten Variante des zweiten Ausführungsbeispiels, wobei das zweite Mittel und der Katalysator in einer separaten Schichtebene des Gassensors angeordnet sind,
Figur 4 einen Querschnitt durch die Großfläche eines Sensorelements gemäß einer dritten Variante des zweiten Ausführungsbeispiels, wobei das erste Mittel in einer separaten Schichtebene des Gassensors angeordnet ist,
Figur 5 einen Querschnitt durch die Großfläche eines Sensorelements gemäß einem dritten Ausführungsbeispiel, bei dem der Katalysator in das zweite Mittel integriert ist,
Figur 6 einen Querschnitt durch die Großfläche eines Sensorelements gemäß einem vierten Ausführungsbeispiel, dessen innerer Gasraum durch eine Diffusionsbarriere unterteilt ist.
Figur 7 einen Querschnitt durch die Groß fläche eines Sensorelements gemäß einem fünften Ausführungsbeispiel, dessen innerer Gasraum durch eine Diffusionsbarriere unterteilt ist und bei dem der Katalysator in das zweite Mittel integriert ist,
Figur 8 einen Querschnitt durch die Großfläche eines Sensorelements gemäß einem sechsten Ausführungsbeispiel, bei dem die Diffusionsbarriere zur Unterteilung des inneren Gasraums zwischen erstem und zweitem Mittel angeordnet ist,
Figur 9 einen Querschnitt durch die Großfläche eines Sensorelements gemäß einer ersten Variante des sechsten Ausführungsbeispiels, wobei das zweite Mittel und der Katalysator in einer separaten Schichtebene des Gassensors angeordnet sind,
Figur 10 einen Querschnitt durch die Großfläche eines Sensorelements gemäß einem siebten Ausfiihrungsbeispiel, bei dem die Bestimmung der zu messenden Gaskomponente auf potentiometrischem Wege erfolgt,
Figur 11 einen Querschnitt durch die Großfläche eines Sensorelements gemäß einem achten Ausführungsbeispiel, bei dem die Bestimmung der zu messenden Gaskomponente auf resistivem Wege erfolgt,
Figur 12 einen Querschnitt durch die Großfläche eines Sensorelements gemäß einem neunten Ausführungsbeispiel, bei dem der Katalysator mit dem ersten Mittel kombiniert ist, und
Figur 13 einen Querschnitt durch die Großfläche eines Sensorelements gemäß einem zehnten Ausführungsbeispiel, bei dem der Katalysator mit dem ersten und dem zweiten Mittel kombiniert ist.

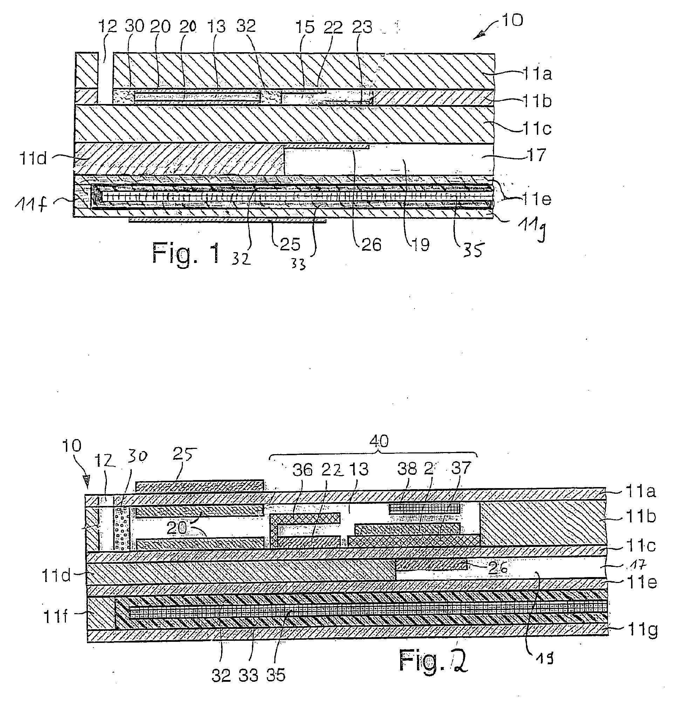

Die in den Figuren 1 bis 13 verwendeten Bezugszeichen bezeichnen, soweit nicht anders angegeben ist, stets funktionsgleiche Baukomponenten eines Sensorelements.

### Ausführungsbeispiele

In Figur 1 ist ein prinzipieller Aufbau einer ersten Ausführungsform der vorliegenden Erfindung dargestellt. Mit 10 ist ein planares Sensorelement eines elektrochemischen Gassensors bezeichnet, das beispielsweise der Bestimmung sauerstoffhaltiger Gase, insbesondere des Stickoxid- oder Ammoniakgehaltes von Abgasen dient. Es weist eine Mehrzahl von sauerstoffionenleitenden Festelektrolytschichten 11a, 11b, 11c, 11d und 11e auf, die beispielsweise als keramische Folien ausgeführt sind und einen planaren keramischen Körper bilden. Sie bestehen aus einem sauerstoffionenleitenden Festelektrolytmaterial, wie beispielsweise mit Y₂O₃ stabilisiertem oder teilstabilisiertem ZrO₂. Die Festelektrolytschichten 11a - 11e können alternativ zumindest teilweise an Stellen, an denen eine Ionenleitung im Festelektrolyten nicht wichtig oder sogar unerwünscht ist, durch Folien aus Aluminiumoxid ersetzt werden.

Die integrierte Form des planaren keramischen Körpers des Sensorelements 10 wird durch Zusammenlaminieren der mit Funlctionsschichten bedruckten keramischen Folien und anschließendem Sintern der laminierten Struktur in an sich bekannter Weise hergestellt.

Das Sensorelement 10 beinhaltet beispielsweise zwei innere Gasräume 13, 15 und einen Referenzgaskanal 19. Der Referenzgaskanal 19 steht durch einen Gaseinlass 17, der an einem Ende aus dem planaren Körper des Sensorelements 10 herausführt, in Kontakt mit einer Referenzgasatmosphäre, die beispielsweise durch die Umgebungsluft gebildet sein kann.

Der innere Gasraum 13 weist eine Öffnung 12 auf, die den Kontakt mit dem zu bestimmenden Gasgemisch ermöglicht. Die Öffnung 12 ist in der Festelektrolytschicht 11a vorzugsweise senkrecht zur Großfläche des Sensorelements 10 angebracht, sie kann jedoch auch in derselben Schichtebene 11b wie die inneren Gasräume 13, 15 angeordnet sein.

Im ersten inneren Gasraum 13 ist eine erste innere Elektrode 20 vorzugsweise in doppelter Ausführung angeordnet. Im zweiten inneren Gasraum 15 befindet sich eine weitere innere Elektrode 22. An der äußeren, dem Messgas unmittelbar zugewandten Seite einer der Festelektrolytschichten 11a, 11e befindet sich eine äußere Elektrode 25, die mit einer nicht dargestellten porösen Schutzschicht bedeckt sein kann.

Die inneren Elektroden 20, 22 bilden jeweils mit der äußeren Elektrode 25 zusammen elektrochemische Pumpzellen. Mittels der Pumpzellen wird ein jeweils konstanter Sauerstoffpartialdruck in den inneren Gasräumen 13, 15 des Sensorelements 10 eingestellt. Zur Kontrolle des eingestellten Sauerstoffpartialdrucks sind die inneren Elektroden 20, 22 zusätzlich mit einer Referenzelektrode 26, die im Referenzgaskanal 19 angeordnet ist, zu sogenannten Nernst- bzw. Konzentrationszellen zusammengeschaltet. Diese ermöglichen einen direkten Vergleich des von der Sauerstoffkonzentration in den inneren Gasräumen 13, 15 abhängigen Sauerstoffpotentials der inneren Elektroden 20, 22 mit dem konstanten Sauerstoffpotential der Referenzelektrode 26 in Form einer messbaren elektrischen Spannung. Die Höhe der an den Pumpzellen 20, 25 bzw. 22, 25 anzulegenden Pumpspannungen wird so gewählt, dass durch Zuoder Abpumpen von Sauerstoff im inneren Gasraum 13 ein konstanter Sauerstoffpartialdruck von beispielsweise 0.1 bis 1000 ppm eingestellt wird.

Im inneren Gasraum 15 befindet sich eine weitere innere Elektrode 23, die zusammen mit der äußeren Elektrode 25 oder der Referenzelektrode 26 eine weitere Pumpzelle bildet. Diese Pumpzelle dient dem Nachweis des zu bestimmenden Gases, wobei das zu bestimmende Gas an der Oberfläche der inneren Elektrode 23 zersetzt und der freiwerdende Sauerstoff abgepumpt bzw. der dabei verbrauchte Sauerstoff eingepumpt wird. Als Maß für die Konzentration des zu bestimmenden Gases wird der zwischen den Elektroden 23, 25 bzw. 23, 26 fließende Pumpstrom herangezogen.

Um zu gewährleisten, dass an den inneren Elektroden 20, 22 keine Zersetzung des zu bestimmenden Gases auftritt, werden die Elektroden 20, 22 aus einem katalytisch inaktiven Material gefertigt. Dieses enthält eine metallische Komponente und Cobalt zur Korrektur der katalytischen Aktivität der jeweiligen inneren Elektrode 20, 22. Die katalytische Aktivität des. Materials wird dabei so eingestellt, dass zwar einerseits keine Zersetzung der zu bestimmenden Gase wie Stickoxide oder Ammoniak auftritt, andererseits jedoch die elektrochemische Reduktion von Sauerstoff katalytisch unterstützt wird.

Als metallische Komponente eignen sich insbesondere Edelmetalle, vor allem die sogenannten Platinmetalle Ruthenium, Rhodium, Palladium, Osmium, Iridium und Platin, und davon insbesondere Platin. Um eine gute Anbindung des Materials der inneren Elektroden 20, 22 an die Festelektrolytschichten 11a, 11c des Sensorelements zu erreichen, enthält das katalytisch inaktive Material weiterhin eine keramische Komponente, vorzugsweise in Form des Materials, aus dem die Festelektrolytschichten des Sensorelements ausgeführt sind. Das katalytisch inaktive Material kann 0.1 bis 99.9 Atom% an Cobalt bezogen auf das Verhältnis Co/Pt enthalten, vorzugsweise beträgt das Verhältnis 30 bis 60 Atom%, wobei ein Gehalt von 45 bis 55 Atom% von besonderem Vorteil ist. Bei einem Co/Pt-Verhältnis von kleiner 25 Atom% kommt es zu einer Platin-Segregation und bei einem Verhältnis von größer 60 Atom% zu einer Segregation von Cobalt. Die segregierten Phasen können als Vorrat für das entsprechende Metall in der Elektrode dienen.

Zur Herstellung der Elektrode kann entweder ein Gemisch aus Platin und Festelektrolyt mit Cobaltpulver in entsprechender Menge versehen werden oder es wird ein metallischer Werkstoff aus Platin und Cobalt in Pulverform hergestellt und mit der keramischen Komponente vermischt. Dieser metallische Werkstoff kann entweder ein Pulvergemisch aus Cobalt und Platin in den entsprechenden Mengenverhältnissen sein oder ein mit Platin überzogenes Cobaltpulver. Dabei wird Cobalt vorzugsweise stromlos mit einer Platinschicht überzogen. Eine weitere Möglichkeit zur Erzeugung des metallischen Werkstoffs besteht in der Verdüsung von Cobalt-Platin-Legierungen zu Pulvern. Das Elektrodenmaterial für die Elektroden 20, 22 wird in allen Fällen als sogenanntes Cennet eingesetzt, und durch eine geeignete Hitzebehandlung mit den keramischen Folien versintert. Die metallische Komponente liegt in der gesinterten inneren Elektrode 20, 22 als Platin-Cobalt-Gemisch oder als entsprechende Legierung bzw. Dotierung vor.

Die weitere innere Elektrode 23 ist katalytisch aktiv ausgeführt und besteht beispielsweise aus Rhodium oder einer Platin/Rhodium-Legierung. Die äußere Elektrode 25 sowie die Referenzelektrode 26 bestehen ebenfalls aus einem katalytisch aktiven Material wie beispielsweise Platin. Das Elektrodenmaterial für alle Elektroden wird dabei ebenfalls als Cermet eingesetzt, um mit den keramischen Folien zu versintern.

In den keramischen Grundkörper des Sensorelements 10 ist ferner zwischen zwei elektrischen Isolationsschichten 32, 33ein Widerstandsheizer 35 eingebettet. Der Widerstandsheizer 35 dient dem Aufheizen des Sensorelements 10 auf die notwendige Betriebstemperatur von beispielsweise 750°C.

Innerhalb des inneren Gasraums 13 ist in Diffusionsrichtung des Gasgemischs den inneren Elektroden 20, 21 eine poröse Diffusionsbarriere 30 vorgelagert. Die poröse Diffusionsbarriere 30 bildet einen Diffusionswiderstand bezüglich des zur inneren Elektrode 20 diffundierenden Gasgemischs aus. Die inneren Gasräume 13, 15 sind beispielsweise durch eine weitere poröse Diffusionbarriere 32 voneinander getrennt. Die weitere Diffusionsbarriere 32 ermöglicht die Einstellung von unterschiedlichen Sauerstoffkonzentrationen in den inneren Gasräumen 13, 15.

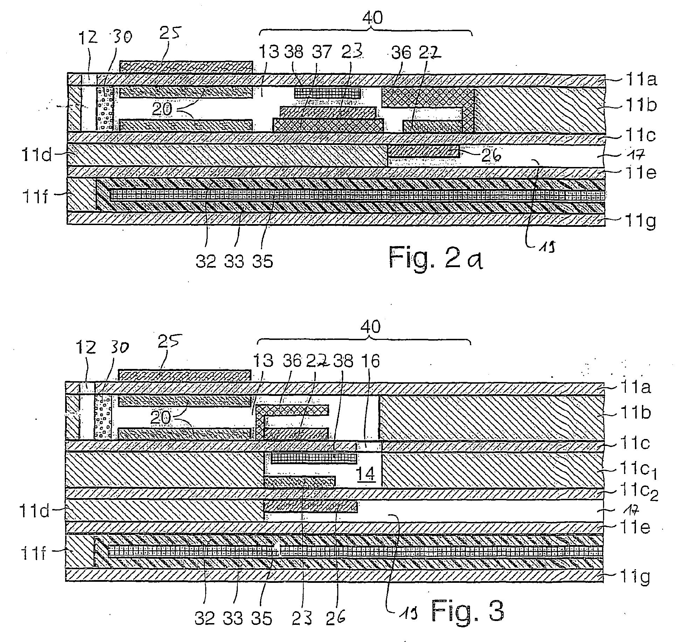

Figur 2 zeigt eine zweite Ausführungsform der vorliegenden Erfindung.

Das Sensorelement 10 beinhaltet vorzugsweise einen einzigen inneren Gasraum 13, der über die Gaseintrittsöffnung 12 in Kontakt mit dem den Gassensor umgebenden Gasgemisch steht.

Die zweite innere Elektrode 22 bildet hier zusammen mit der Referenzelektrode 26 eine zweite elektrochemische Pumpzelle und die dritte innere Elektrode 23 mit der Referenzelektrode 26 eine dritte elektrochemische Pumpzelle.

Eine weitere Möglichkeit besteht darin, die zweite innere Elektrode 22 mit der äußeren Elektrode 25 zu einer zweiten elektrochemischen Pumpzelle zusammenzuschalten bzw. die dritte innere Elektrode 23 mit der äußeren Elektrode 25 zu einer dritten elektrochemischen Pumpzelle. Im Betrieb des Sensorelements wird analog zum ersten Ausführungsbeispiel die erste Pumpzelle 20, 25 zusammen mit der Konzentrationszelle 20, 26 zur Regulierung des Sauerstoffanteils des in den inneren Gasraum 13 eindiffundierenden Gasgemischs herangezogen.

Das auf einen konstanten Sauerstoffpartialdruck eingestellte Gasgemisch im inneren Gasraum 13 gelangt in den sensitiven Bereich 40 des Gassensors. In diesem ist die zweite innere Elektrode 22 der zweiten Pumpzelle angeordnet. An der zweiten inneren Elektrode 22, die vorzugsweise, jedoch nicht zwingend dasselbe katalytisch inaktive Material aufweist, wird durch Anlegen eines entsprechenden Potentials aus einer weiteren Gaskomponente des Gasgemischs, die nicht die zu messende Gaskomponente ist, ein Reaktionsgas erzeugt, das mit der zu messenden Gaskomponente umgesetzt wird. Dient der Gassensor beispielsweise zur Bestimmung von Stickoxiden, so wird an der zweiten inneren Elektrode 22 ein Potential von beispielsweise -600 bis -750 mV gegenüber der Referenzelektrode 26 eingestellt und Wasser bzw. Kohlendioxid zu Wasserstoff bzw. Kohlenmonoxid reduziert. Der dabei freigesetzte Sauerstoff wird elektrochemisch reduziert und abgepumpt.

Die zweite innere Elektrode 22 ist so dimensioniert, dass das erzeugte Reaktionsgas (Wasserstoff bzw. Kohlenmonoxid) im Überschuss bezogen auf die Menge an im Gasgemisch enthaltener zu messender Gaskomponente (Stickoxide) vorliegt. Um zu verhindern, dass aufgrund des stark negativen Potentials der zweiten inneren Elektrode 22 auch die zu messende Gaskomponente (Stickoxide) zersetzt wird und somit nicht mehr der Messung zur Verfügung steht, ist die zweite innere Elektrode 22 vorzugsweise mit einer Schutzvorrichtung 36 versehen. Die Schutzvorrichtung 36 kann beispielsweise, wie in Figur 2 dargestellt, aus Festelektrolytmaterial oder einem sonstigen geeigneten keramischen Material ausgeführt sein. Die geometrische Gestaltung der Schutzvorrichtung 36 in Form einer geschlitzten oder mit einem Loch versehenen Deckschicht bewirkt, dass nur ein kleiner Teil des eindiffundierenden Gasgemischs in Kontakt mit der zweiten inneren Elektrode 22 kommt. Da auch dieser kleine Teil des Gasgemischs einen ausreichend hohen Anteil der weiteren Gaskomponente (Wasser, Kohlendioxid) aufweist, kann trotzdem stets ein Überschuss an Reaktionsgas zur Verfügung gestellt werden. Gasgemische, die beispielsweise Luft enthalten oder Abgase von Verbrennungsmotoren, erfüllen diese Voraussetzung. Die zweite innere Elektrode 22 ist vorzugsweise ebenfalls aus dem der Erfindung zugrundeliegenden katalytisch inaktiven Material ausgeführt. Dabei kann die Zusammensetzung des Materials hinsichtlich des Anteils an metallischer Komponente bzw. Cobalt von demjenigen der Elektrode 20 abweichen.

Das mit dem Reaktionsgas (Wasserstoff bzw. Kohlenmonoxid) angereicherte Gasgemisch gelangt nun in einen der Gaseintrittsöffnung 12 abgewandten Teil des sensitiven Bereichs 40. Dort ist im inneren Gasraum 13 ein Katalysator 38 in Form einer katalytisch aktiven Schicht aufgebracht, der die Umsetzung des Reaktionsgases (Wasserstoff bzw. Kohlenmonoxid) mit der zu messenden Gaskomponente (Stickoxide) katalysiert.

Da das Reaktionsgas im Überschuss vorliegt, ist eine vollständige Umsetzung der zu messenden Gaskomponente gewährleistet. Auf der der Gaseintrittsöffnung 12 abgewandten Seite des sensitiven Bereichs 40 ist die dritte innere Elektrode 23 angeordnet, die zusammen mit der Referenzelektrode 26 die dritte Pumpzelle bildet. Optional kann die dritte innere Elektrode 23 auf einer zusätzlichen Festelektrolytschicht 37 aufgebracht sein, um die Diffusionsstrecke zwischen Katalysator 38 und der dritten inneren Elektrode 23 zu verkürzen.

Das Potential der dritten inneren Elektrode 23 wird so gewählt, dass Sauerstoff vom Referenzgaskanal 19 zur dritten inneren Elektrode 23 gepumpt wird und dort mit dem verbliebenen Reaktionsgas reagiert. Da es sich bei dieser Reaktion um eine Rückreaktion der an der zweiten inneren Elektrode 22 ablaufenden Reaktionen handelt, bildet sich dabei die weitere Gaskomponente (Wasser bzw. Kohlendioxid) zurück. Dazu wird an der dritten inneren Elektrode 23 ein Potential von -300 bis -500 mV eingestellt.

Die dritte innere Elektrode 23 ist aus einem katalytisch aktiven Material wie beispielsweise Platin oder einer Legierung aus Platin, Rhodium und/oder Palladium gefertigt. Der in der dritten Pumpzelle fließende Pumpstrom wird bestimmt und ist der Restkonzentration des Reaktionsgases direkt proportional. Da die ursprünglich an der zweiten inneren Elektrode 22 erzeugte Ausgangskonzentration an Reaktionsgas im Gasgemisch annähernd konstant ist und durch eine Eichmessung einfach bestimmt werden kann, lässt sich aus der Differenz der Ausgangskonzentration und der Restkonzentration des Reaktionsgases nach dessen Umsetzung mit der zu messenden Gaskomponente auf den ursprünglichen Gehalt an im Gasgemisch vorhandener zu messender Gaskomponente schließen. Je kleiner die gemessene Restkonzentration des Reaktionsgases ist, desto größer war ursprünglich die im Gasgemisch vorhandene Konzentration an zu messender Gaskomponente.

Die Anwendung eines das Sensorelement 10 aufweisenden Gassensors ist nicht auf die Bestimmung von Stickoxiden beschränkt. Grundsätzlich lassen sich mittels der zweiten Pumpzelle Reaktionsgase entweder durch elektrochemische Reduktion oder Oxidation erzeugen. Im ersten Fall können reduzierbare Gaskomponenten bestimmt werden, im zweiten Fall oxidierbare.

Wird an der zweiten inneren Elektrode 22 der zweiten Pumpzelle ein reduzierendes Potential eingestellt, so können nicht nur Wasserstoff und Kohlenmonoxid als Reaktionsgase erzeugt werden, sondern prinzipiell auch Stickstoffmonoxid aus Stickstoffdioxid oder Schwefelmonoxid aus Schwefeldi- oder -trioxid.

Die erzeugten Reaktionsgase können mit reduzierbaren Gaskomponenten umgesetzt und somit zu deren Bestimmung herangezogen werden. Die Auswahl des für den Einzelfall geeigneten Reaktiongases richtet sich nach den elektrochemischen Standardpotentialen der bei der Erzeugung bzw. Umsetzung des Reaktionsgases abiaufenden Redoxreaktionen, wie auch nach reaktionskinetischen Gesichtspunkten.

Die Messung oxidierbarer Gaskomponenten ist ebenfalls möglich, ohne dass an der Ausführungsform des Gassensors eine Änderung nötig wäre. Lediglich das Potential der zweiten inneren Elektrode 24 wird nun so gewählt, dass eine oder mehrere Gaskomponenten des Gasgemischs bei geeigneten Temperaturen gezielt oxidiert werden.

Dies können beispielsweise Wasser, Stickstoffmonoxid, Schwefelmonoxid oder Schwefeldioxid sein.

Am Katalysator 38 kommt es dann zu einer Reaktion des oxidierend wirkenden Reaktionsgases mit den zu bestimmenden reduzierenden Gaskomponenten, wie beispielsweise Ammoniak, Wasserstoff, Methan oder Kohlenwasserstoffen.

Um den Restgehalt des oxidierend wirkenden Reaktionsgases an der dritten inneren Pumpelektrode 23 bestimmen zu können, wird das Potential dieser Elektrode gegenüber der Referenzelektrode 26 so gewählt, dass der Restgehalt an Reaktionsgas an der dritten Pumpelektrode 23 reduziert und der dabei frei werdende Sauerstoff in den Referenzgaskanal 19 abgepumpt wird. Als Messsignal wird der nun mit umgekehrtem Vorzeichen auftretende Pumpstrom herangezogen. Aus der Differenz der zunächst vorliegenden Ausgangskonzentration und der nach der Umsetzung verbleibenden Restkonzentration des Reaktionsgases wird auf die ursprünglich im Messgas vorliegende Konzentration an zu messender Gaskomponente geschlossen. Der vorliegende Gassensor eignet sich demnach je nach Wahl der Potentiale an den inneren Elektroden 22, 23 sowohl zur Bestimmung von reduzierenden wie auch von oxidierenden Gaskomponenten eines Gasgemischs.

Wird an der zweiten inneren Elektrode 22 ein reduzierendes und an der dritten inneren Elektrode 23 ein oxidierendes Potential eingestellt, so können mittels des Gassensors oxidierende Gaskomponenten bestimmt werden. Wird an der zweiten inneren Elektrode 22 ein oxidierendes und an der dritten inneren Elektrode 23 ein reduzierendes Potential eingestellt, so lassen sich reduzierende Gaskomponenten bestimmen. Dabei weist die zweite innere Elektrode 22 eine selektive Wirkung bezüglich der Erzeugung von Sauerstoff auf und verhindert eine Oxidation der nachzuweisenden Gaskomponente.

Durch eine Feinabstimmung des oxidierenden bzw. reduzierenden Potentials an der zweiten inneren Elektrode 22 können gezielt bestimmte oxidierende bzw. reduzierende Reaktionsgase oder Mischungen verschiedener oxidierender bzw. reduzierender Reaktionsgase erzeugt werden. Die dazu einzustellenden Potentiale ergeben sich unter Berücksichtigung möglicher Überspannungen aus den Standardpotentialen der Reaktionen, bei denen aus weiteren Gaskomponenten die benötigten Reaktionsgase gebildet werden.

Da die an den Elektroden 22, 23 anliegenden Potentiale kurzfristig variiert werden können, besteht darüber hinaus die Möglichkeit, periodisch oder in kurzen Zeitintervallen alternierend nacheinander eine oder mehrere reduzierende bzw. oxidierende Gaskomponenten nacheinander mit einem Sensor zu bestimmen.

In den Figuren 2a, 3 und 4 sind Varianten des in Figur 2 dargestellten Sensorelements abgebildet. Bei der in Figur 2a dargestellten Variante ist die zweite innere Pumpelektrode 22 sowie die Schutzvorrichtung 36 in den der Gaseintrittsöffnung 12 abgewandten Teil des sensitiven Bereichs 40 des Sensorelements verlagert. Der Katalysator 38 bzw. die dritte innere Pumpelektrode 23 sind dagegen auf der der Gaseintrittsöffnung 12 zugewandten Seite des sensitiven Bereichs 40 angeordnet. Da bei dieser Variante die zu messende Gaskomponente im sensitiven Bereich 40 gleich auf den Katalysator 38 trifft, ohne zunächst die zweite innere Pumpelektrode 22 zu passieren, ist die Wahrscheinlichkeit sehr gering, dass die zu messende Gaskomponente unerwünschterweise zur zweiten inneren Pumpelektrode 22 gelangt, ohne am Katalysator 38 umgesetzt zu werden. Eine ausreichende Bereitstellung des Reaktionsgases ist auch bei dieser Anordnung gewährleistet, da die dafür benötigte weitere Gaskomponente ungehindert zur zweiten inneren Elektrode 22 vordringen kann.

Eine zweite Variante des Sensorelements gemäß dem zweiten Ausführungsbeispiel ist in Figur 3 dargestellt. Das Sensorelement umfasst zwei zusätzliche Festelektrolytschichten 11c1, 11c2. In der Schicht 11c1 befindet sich ein weiterer innerer Gasraum 14, der über eine Durchbrechung 16 durch die Festelektrolytschicht 11c hindurch mit dem ersten inneren Gasraum 13 in Kontakt steht. Im zweiten inneren Gasraum 14 befinden sich der Katalysator 38 und die dritte Pumpelektrode 23. Dieser Aufbau des Sensorelements bewirkt eine Vergrößerung der Diffusionsstrecke innerhalb des sensitiven Bereichs 40 des Sensorelements, ohne dass gleichzeitig das Sensorelement verlängert werden muss. Die größere Diffusionsstrecke bewirkt eine Entkopplung der Erzeugung des Reaktionsgases von dessen Umsetzung mit der zu messenden Gaskomponente bzw. von der Detektion des Restgehalts des Reaktionsgases.

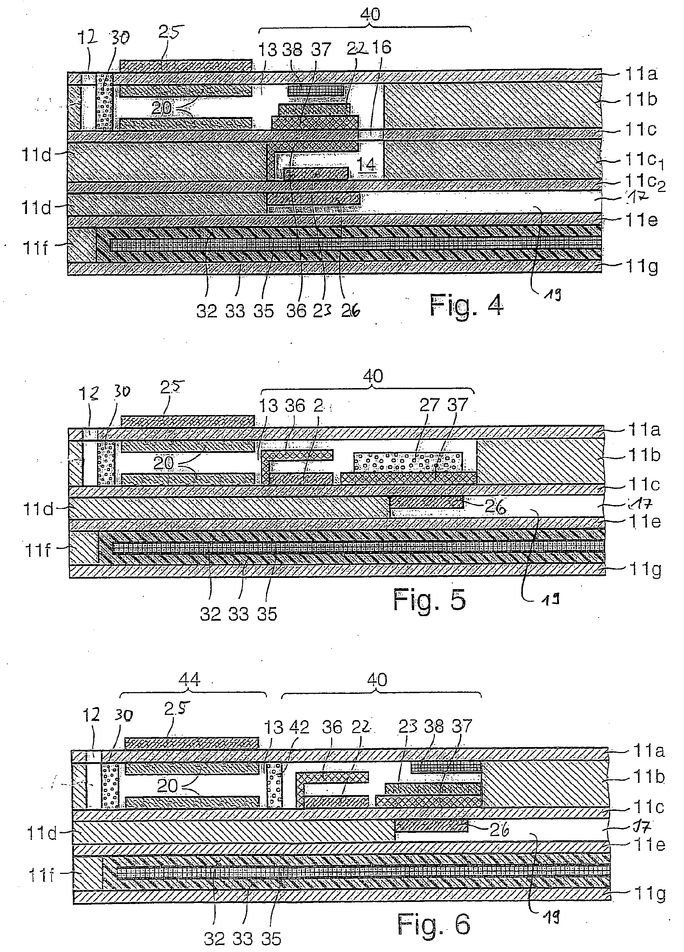

In Figur 4 ist eine dritte Variante des Sensorelements gemäß dem zweiten Ausführungsbeispiel dargestellt. Dessen Aufbau weist die Schichtfolge des in Figur 3 dargestellten Sensorelements auf. Die zweite innere Pumpelektrode 22 sowie die Schutzvorrichtung 36 befinden sich bei dieser Variante im weiteren inneren Gasraum 14 und der Katalysator 38 bzw. die dritte Pumpelektrode 23 sind im ersten inneren Gasraum 13 angeordnet. Diese Variante verbindet die Vorteile der ersten Variante gemäß Figur 2a mit den Vorteilen der zweiten Variante gemäß Figur 3. Die Tatsache, dass die zu messende Gaskomponente im sensitiven Bereich 40 gleich zum Katalysator 38 gelangt, ohne zunächst die zweite innere Pumpelektrode 22 zu passieren, und die verlängerte Diffusionsstrecke zwischen Katalysator 38 und zweiter innerer Elektrode 22 minimieren die Wahrscheinlichkeit, dass die zu messende Gaskomponente zur zweiten inneren Elektrode 22 gelangen kann.

In Figur 5 ist ein Sensorelement gemäß einem dritten Ausführungsbeispiel der vorliegenden Erfindung dargestellt. Das Sensorelement weist anstelle eines Katalysators 38 und einer separaten dritten inneren Elektrode 23 eine katalytisch aktive, vorzugsweise poröse Kombinationselektrode 27 auf. Diese ist in dem der Gaseintrittsöffnung 12 abgewandten Teil des sensitiven Bereichs 40 des Sensorelements angeordnet. Die Kombinationselektrode 27 kann in Form einer mit einer katalytisch aktiven Schicht teilweise oder vollständig bedeckten Elektrode ausgeführt sein oder vollständig aus einem katalytisch aktiven, vorzugsweise porösen Material bestehen. Die Kombinationselektrode 27 hat den Vorteil, dass die räumliche Trennung von Umsetzung des Reaktionsgases mit der zu messenden Gaskomponente und Detektion des Restgehaltes an Reaktionsgas aufgehoben wird. Darüber hinaus lässt sich mit Hilfe der Kombinationselektrode 27 auch die Umsetzung von Reaktionsgasen bzw. zu messenden Gaskomponenten katalysieren, die mittels eines katalytisch aktiven Materials allein nicht katalysierbar ist, sondern zusätzlich das Anlegen eines entsprechenden Potentials an den Katalysator benötigt. Weiterhin ist vorteilhaft, dass bei der Herstellung eines Sensorelements gemäß dem zweiten Ausführungsbeispiel gegenüber den zuvor beschriebenen Varianten ein Arbeitsschritt, der die Aufbringung eines separaten Katalysators 38 beinhaltet, vermieden wird.

Eine Variante des in Figur 5 dargestellten Sensorelements besteht darin, analog zur der in Figur 2a dargestellten Variante eine Vertauschung von Reaktionsgas erzeugender innerer Elektrode 22 bzw. Schutzvorrichtung 36 und Kombinationselektrode 27 vorzunehmen. Die zweite innere Pumpelektrode 22 bzw. die Schutzvorrichtung 36 ist somit in dem der Gaseintrittsöffnung 12 abgewandten Teil des sensitiven Bereichs 40 des Sensorelements angeordnet. Gleichzeitig ist die Kombinationselektrode 27 in dem der Gaseintrittsöffnung 12 zugewandten Teil des sensitiven Bereichs 40 vorgesehen. Bei dieser Variante wird die Wahrscheinlichkeit, dass die zu messende Gaskomponente in Kontakt mit der zweiten inneren Pumpelektrode 22 kommt und für die Messung verloren geht, minimiert.

In einer weiteren Variante des in Figur 5 dargestellten Sensorelements, die weitgehend der in Figur 3 bereits dargestellten entspricht, wird die Kombinationselektrode 27 in eine separate Schicht 11c1 verlagert. Auch hier ist eine Verlängerung der Diffusionsstrecke zwischen Reaktionsgas erzeugender innerer Elektrode 22 und Kombinationselektrode 27 bei gleichzeitiger Beibehaltung der Längenausdehnung des Sensorelements gegeben.

Eine dritte Variante des in Figur 5 beschriebenen Sensorelements beinhaltet analog zu der bereits in Figur 4 abgebildeten dritten Variante der zweiten Ausführungsform die Anordnung der zweiten inneren Pumpelektrode 22 bzw. der Schutzvorrichtung 38 in der separaten Festelektrolytschicht 11c1. Diese Variante verbindet die Vorteile der beiden bereits beschriebenen Varianten des in Figur 5 dargestellten Sensorelements miteinander.

In Figur 6 ist ein Sensorelement gemäß einem vierten Ausführungsbeispiel der vorliegenden Erfindung abgebildet, bei dem der innere Gasraum 13 zusätzlich eine Diffusionsbarriere 42 beinhaltet, die den inneren Gasraum 13 in einen den Sauerstoffgehalt des Messgases regulierenden Bereich 44 und den sensitiven Bereich 40 unterteilt. Bei den bisher beschriebenen Ausführungsformen des Sensorelements besteht grundsätzlich die Möglichkeit, dass Reaktionsgas trotz der Schutzvorrichtung 36 in den der Gaseintrittsöffnung 12 zugewandten Teil des inneren Gasraums 13 eindringt. Handelt es sich dabei um ein reduzierendes Reaktionsgas, so wird es aufgrund des dort höheren Sauerstoffgehaltes umgesetzt; handelt es sich um ein oxidierendes Reaktionsgas, wird es an der ersten inneren Elektrode 20 zersetzt. Die Diffusionsbarriere 42 verhindert eine unerwünschte Diffusion des an der zweiten inneren Elektrode 22 erzeugten Reaktionsgases in den der Gaseintrittsöffnung 12 zugewandten Teil des inneren Gasraums 13. Dies erhöht die Messgenauigkeit des Sensorelements, da die Konzentration des erzeugten Reaktionsgases im sensitiven Bereich 40 des Sensorelements nur von der eindiffundierenden Menge an zu messender Gaskomponente abhängig ist.

Eine Variante des in Figur 6 dargestellten Sensorelements besteht darin, eine Vertauschung der Positionen der inneren Elektroden 22, 23 bzw. der Schutzvorrichtung 36 und des Katalysators 38 gemäß dem bereits in Figur 2a dargestellten Sensorelements vorzunehmen. Eine weitere Variante beruht, ähnlich wie in Figur 3, auf der Anordnung der dritten inneren Elektrode 23 bzw. des Katalysators 38 in einer separaten Schichtebene 11c1. Eine dritte Variante ergibt sich, vergleichbar der in Figur 4 dargestellten Variante, durch die Anordnung der zweiten inneren Elektrode 24 bzw. der Schutzvorrichtung 36 in der separaten Festelektrolytschicht 11c1.

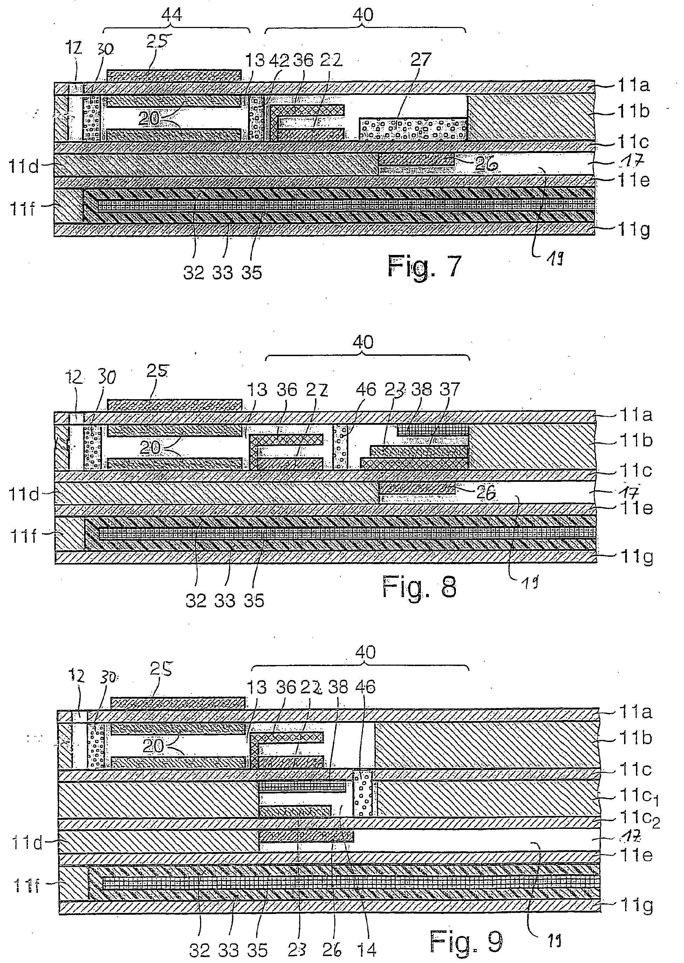

In Figur 7 ist ein Sensorelement gemäß einer fünften Ausführungsform der vorliegenden Erfindung dargestellt. Das in Figur 7 dargestellte Sensorelement verbindet die Vorteile der Merkmale des zweiten mit denen des dritten Ausführungsbeispieis. Es beinhaltet sowohl eine Diffusionsbarriere 42 zwischen dem sauerstoffregulierenden und dem sensitiven Bereich 40, 44 des inneren Gasraums 13 als auch die Zusammenfassung von Katalysator 38 und dritter innerer Elektrode 23 zur Kombinationselektrode 27. Auch hier ist eine Vertauschung der Positionen von zweiter innerer Elektrode 22 bzw. Schutzvorrichtung 36 und Kombinationselektrode 27 möglich sowie die Verlagerung der Kombinationselektrode 27 oder der zweiten inneren Elektrode 22 in eine separate Schichtebene 11c1.

Figur 8 ist ein Sensorelement gemäß einem sechsten Ausfühnmgsbeispiel der vorliegenden Erfindung zu entnehmen. Das in Figur 8 dargestellte Sensorelement basiert auf dem in Figur 6 dargestellten und weist innerhalb des inneren Gasraums 13 eine Diffusionsbarriere 46 auf, die der zweiten inneren Pumpelektrode 22 in Strömungsrichtung des Gasgemischs nachgeschaltet ist und den sensitiven Bereich 40 räumlich in einen der Gaseintrittsöffnung 12 zugewandten und einen der Gaseintrittsöffnung 12 abgewandten Teil untergliedert. Eine derartige Ausführungsform ist vor allen Dingen für Anwendungsfälle gedacht, bei denen das erzeugte Reaktionsgas gegenüber Sauerstoff inert ist bzw. an der ersten inneren Elektrode 20 keiner Zersetzung unterliegt. Durch die Diffusionsbarriere 46 wird die Diffusion zum Katalysator 38 bzw. zur dritten inneren Elektrode 23 erschwert, so dass der Effekt einer verlängerten Diffusionsstrecke zwischen zweiter und dritter innerer Elektrode 22, 23 noch verstärkt wird.

Wird zusätzlich, wie in Figur 9 dargestellt, der Katalysator 38 bzw. die dritte innere Pumpelektrode 23 in eine separate Schichtebene 11c 1 verlegt, so wird gemäß dieser ersten Variante des fünften Ausführungsbeispiels durch Aufbringung der Diffusionsbarriere 46 im Durchbruch 16 der Festelektrolytschicht 11c der Effekt einer erschwerten Diffusion weiter verstärkt. Die erschwerte Diffusion führt zu einer Beseitigung von Inhomogenitäten innerhalb des Gasgemischs.

Eine weitere Variante besteht darin, den Katalysator 38 und die dritte innere Elektrode 23 zu einer Kombinationselektrode 27 zusammenzufassen, die beispielsweise, wie auch die zweite innere Elektrode 22 in die separate Schichtebene 11c 1 verlegt werden kann.

Variationen des der Erfindung zugrunde liegenden Sensorelements unter Beibehaltung des Meßprinzips sind ebenfalls Gegenstand der Erfindung. So können die inneren Gasräume 13, 14, 15 optional mit porösem Material als Diffusionswiderstand gefüllt werden oder mehrere Diffusionsbarrieren enthalten. Darüber hinaus können mehr als eine elektrochemische Zelle zur Regulierung des Sauerstoffgehalts des Messgases vorgesehen werden bzw. mehr als eine elektrochemische Zelle zur Erzeugung eines reduzierenden bzw. oxidierenden Reaktionsgases. Auch das der Bestimmung des Restgehaltes des Reaktionsgases dienende Mittel kann in mehrfacher Ausführung vorgesehen sein.

Die Detektion des Restgehaltes an Reaktiongas im Gasgemisch erfolgt bei den beschriebenen Ausführungsbeispielen exemplarisch mittels der dritten Pumpzelle auf amperometrischem Wege. Es ist jedoch auch möglich, die Detektion potentiometrisch mittels einer Konzentrationszelle vorzunehmen. Dazu wird die dritte innere Elektrode 23 beispielsweise mit der Referenzelektrode 26 zu einer Nernst- oder Konzentrationszelle zusammengeschaltet.

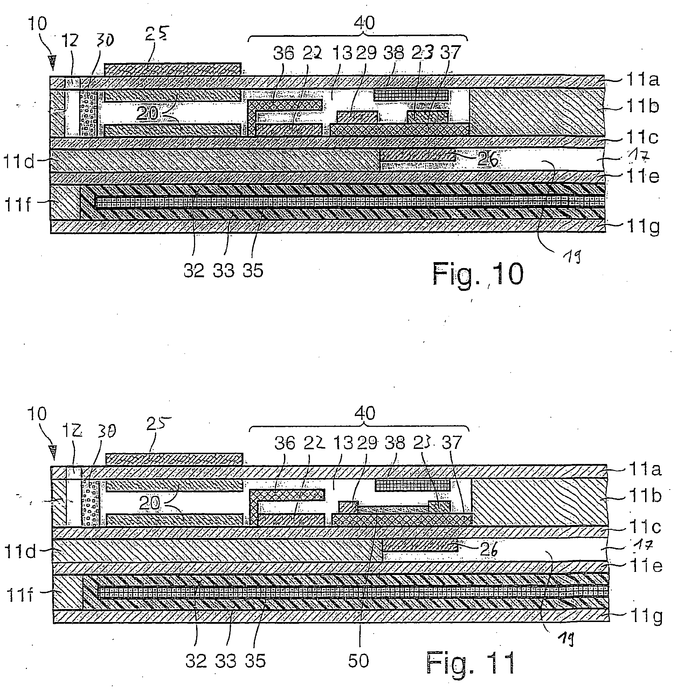

Die potentiometrische Detektion von Reaktionsgasen wie Wasserstoff oder Kohlenmonoxid erfolgt besonders vorteilhaft durch Verwendung eines sogenannten Ungleichgewichtssensors. Ein derartiges Sensorelement ist in Figur 10 dargestellt. Im inneren Gasraum 13 befindet sich zusätzlich eine vierte innere Elektrode 29, die katalytisch inaktiv ist und mit der katalytisch aktiven dritten inneren Elektrode 23 zu einer Nemst- oder Konzentrationszelle zusammengeschaltet ist. Da sich an der katalytisch aktiven dritten inneren Elektrode 23 ein anderes Potential ausbildet als an der katalytisch inaktiven vierten inneren Elektrode 29, kann eine Spannung als Messsignal ermittelt werden. Dieser Effekt ist besonders ausgeprägt, wenn als dritte innere Elektrode 23 eine Kombinationselektrode 27 verwendet wird unter Verzicht auf den Katalysator 38.

Eine weitere Möglichkeit der Detektion des Reaktionsgases besteht in der Verwendung eines resistiven Meßelements. Ein entsprechendes Ausfiihrungsbeispiel ist in Figur 11 dargestellt. Die dritte und die vierte innere Elektrode 23, 29 werden mit einer Spannung beaufschlagt und der Widerstand einer gassensitiven Schicht 50 zwischen den beiden inneren Elektroden 23, 29 wird bestimmt.

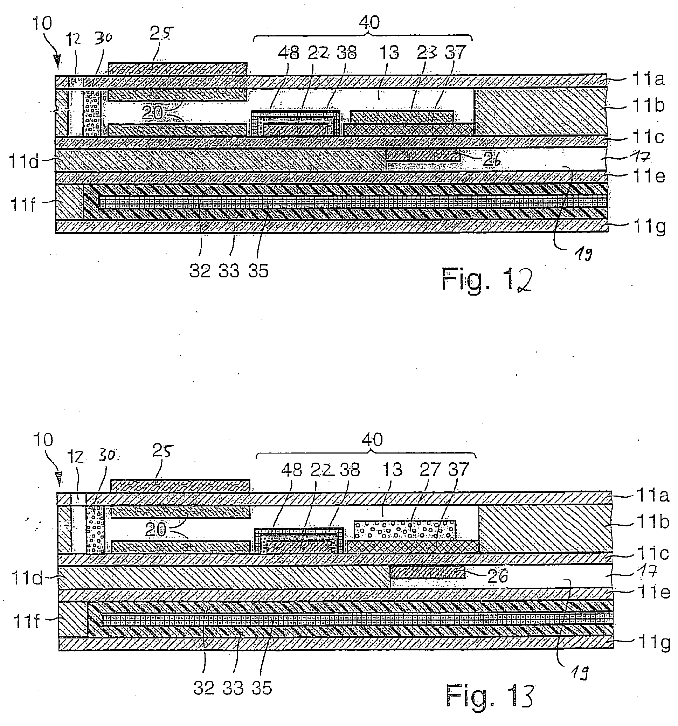

In einer weiteren vorteilhaften Ausführung wird gemäß Figur 12 der Katalysator 38 mit der zweiten inneren Elektrode 22 kombiniert. Dabei kann der Katalysator die zweite innere Elektrode 22 teilweise oder vollständig bedecken, wobei zwischen dem Katalysator 38 und der Oberfläche der zweiten inneren Elektrode 22 eine zusätzliche, vorzugsweise poröse Festelektrolytschicht 48 angeordnet ist, um zu verhindern, dass die zu messende Gaskomponente am Katalysator 38 elektrochemisch umgesetzt wird. Die Kombination von Katalysator 38 und zweiter innerer Elektrode 22 verhindert besonders wirkungsvoll den Zutritt von zu messender Gaskomponente zur zweiten inneren Elektrode 22, da die zu messende Gaskomponente zunächst den porösen Katalysator 38 passieren muss, bevor sie zur zweiten inneren Elektrode 22 gelangt. Im Katalysator 38 trifft sie auf einen Überschuss des in gegenläufiger Richtung diffundierenden Reaktionsgases und wird vollständig umgesetzt.

In Figur 13 ist ein Sensorelement gemäß einem neunten Ausführungsbeispiel dargestellt. Dabei wird der Katalysator 38 sowohl mit der zweiten inneren Elektrode 22 als auch mit der dritten inneren Elektrode 23 kombiniert. Diese Anordnung führt zu einer besonders effektiven Vermeidung der Diffusion der zu messenden Gaskomponente zur zweiten inneren Elektrode 22.

Um einen besonders günstigen Gasfluss innerhalb des Gassensors zu gewährleisten, können über die Schutzvorrichtung 36 hinaus eine oder mehrere Vorrichtungen zur Lenkung des Gasstroms innerhalb des inneren Gasraums 13, 14 vorgesehen sein.

Die Anwendungsmöglichkeiten des der Erfindung zugrunde liegenden Gassensors sind beispielsweise in der Schadstoffdetektion in Abgasen von Verbrennungsmotoren zu sehen. So ermöglicht insbesondere die Detektion von Stickoxiden eine Kontrolle beispielsweise der Funktionstüchtigkeit oder des Beladungszustands eines NOx-Speicherkatalysators. Dazu wird der Gassensor in einem Abgasstrang dem NOx-Speicherkatalysator in Strömungsrichtung des Abgases nachgeordnet angebracht. Darüber hinaus wird durch die Bestimmung von Ammoniak die Kontrolle von mit Ammoniak oder Harnstoff betriebenen SCR-Systemen ermöglicht. Dabei wird der Gassensor im Abgasstrang zwischen Abgasnachbehandlungseinheit und Auspuff angeordnet und der Ammoniakgehalt des austretenden Abgases kontrolliert.

Auch bei Verbrennungsanlagen zu Heizzwecken kann der Gassensor zur Schadstoffanalyse verwendet werden. Darüber hinaus besteht die Möglichkeit, durch die Detektion beispielsweise von Methan die Vollständigkeit der Verbrennung zu überprüfen.

Grundsätzlich ermöglicht der Gassensor sowohl den rein qualitativen Nachweis der Existenz einer zu messenden Gaskomponente als auch die Bestimmung deren Konzentration in einem Gasgemisch.

## Patentansprüche

1. Elektrochemische Pumpzelle eines Gassensors auf Festelek-trolytbasis, der der Messung einer Gaskomponente in einem Gasgemisch dient, wobei die elektrochemische Pumpzelle mindestens zwei Pumpelektroden aufweist, die auf einer Festelektrolytschiclut angeordnet sind, wobei an die Pumpelektroden eine elektrische Pumpspannung anlegbar ist und mindestens eine der Pumpelektroden eine verminderte katalytische Aktivität aufweist, **dadurch gekennzeichnet, dass** die mindestens eine Pumpelektrode mit verminderter katalytischen Aktivität Cobalt enthält.

2. Elektrochemische Pumpzelle nach Anspruch 1, **dadurch gekennzeichnet, dass** die mindestens eine Pumpelektrode zusätzlich Platin enthält.

3. Elektrochemische Pumpzelle nach Anspruch 2, **dadurch gekennzeichnet, dass** die mindestens eine Pumpelektrode eine Platin-Cobalt-Legierung enthält.

4. Elektrochemische Pumpzelle nach einem der Ansprüche 1 bis 3, **dadurch gekennzeichnet, dass** die mindestens eine Pumpelektrode in einem inneren Gasraum eines Gassensors angeordnet ist.

5. Elektrochemische Pumpzelle nach einem der Ansprüche 2 bis 4, **dadurch gekennzeichnet, dass** die mindestens eine Pumpelektrode einen Cobaltgehalt von 30 bis 60 Atom%, insbesondere von 45 bis 55 Atom% bezogen auf das Verhältnis von Cobalt. zu Platin aufweist.

6. Gassensor auf Festelektrolytbasis zur Messung einer Gaskomponente in einem Gasgemisch, **dadurch gekennzeichnet, dass** er mindestens eine Pumpzelle gemäß einem der Ansprüche 1 bis 5 aufweist.

7. Verfahren zur Herstellung einer elektrochemischen Pumpzelle für Gassensoren auf Festelektrolytbasis zur Messung einer Komponente eines Gasgemischs, wobei ein metallhaltiges Ausgangsmaterial auf einen Festelektrolyten aufgebracht und danach zur Erzeugung einer Elektrode einer Hitzebehandlung unterzogen wird, **dadurch gekennzeichnet, dass** zunächst ein Pulver erzeugt wird, das Cobalt und ein weiteres Metall enthält, und dass in einem weiteren Schritt eine keramische Komponente unter Bildung des metallhaltigen Ausgangsmaterials zugemischt wird.

8. Verfahren nach Anspruch 7, **dadurch gekennzeichnet, dass** zur Erzeugung des Pulvers Cobaltpulver mit einem Überzug des weiteren Metalls versehen wird.

9. Verfahren nach Anspruch 7, **dadurch gekennzeichnet, dass** zur Erzeugung des Pulvers eine Legierung des Cobalts mit dem weiteren Metall pulverisiert wird.

10. Verfahren nach einem der Ansprüche 7 bis 9, **dadurch gekennzeichnet, dass** das weitere Metall ein Edelmetall ist.

11. Verfahren nach einem der Ansprüche 7 bis 10, **dadurch gekennzeichnet, dass** das weitere Metall Platin ist.

12. Verfahren nach einem der Ansprüche 7 bis 11, **dadurch gekennzeichnet, dass** eine Pumpzelle nach einem der Ansprüche 1 bis 6 hergestellt wird.
